# DEMANDE DE BREVET EUROPEEN

(11) **EP 4 624 874 A1**
(43) Date de publication de la demande: **01.10.2025**
(21) Numéro de dépôt: 25166336.5
(22) Date de dépôt: 26.03.2025
(51) Int. Cl.: G01G 19/42, G01G 19/52, G01G 21/22

(54) **DISPOSITIF DE STOCKAGE POUR RECIPIENTS EQUIPE D'UN SYSTEME DE SURVEILLANCE DE L'ETAT DU STOCK**

(30) Priorité: 29.03.2024 FR 2403337
(71) Demandeur: Botisum, 92000 Nanterre (FR)
(72) Inventeur: DRAGHI, Claude Bruno, 92000 Nanterre (FR)
(74) Mandataire: Novagraaf Technologies

(57) **Abrégé**

La présente invention a pour objet un dispositif de stockage (10) pour des récipients (12), comportant une caisse (14) munie de plaques intercalaires (20) superposées de manière à permettre un empilement de plusieurs couches de récipients (12), et comportant au moins un plateau de support (24) qui est intercalé entre le fond (16) de la caisse (14) et l'empilement de récipients (12). Le plateau de support (24) comporte des capteurs de poids (26) qui sont agencés sous le plateau de support (24). Les capteurs de poids (26) sont reliés à un module de communication (30) qui est configuré pour pouvoir transmettre des informations de mesure de poids provenant des capteurs de poids (26) vers une unité électronique centrale (32) de manière à permettre une comptabilisation instantanée des récipients (12) stockés dans le dispositif de stockage (10).

## Description

### Domaine technique de l'invention

La présente invention concerne un dispositif de stockage de récipients tels que des bouteilles de vin.

### Arrière-plan technique

Dans le domaine de la viticulture, il est courant de stocker les bouteilles de vin en position couchée et empilées dans des caisses métalliques grillagées. Ces caisses métalliques peuvent être gerbables ce qui permet de stocker une grande quantité de bouteilles tout en minimisant l'encombrement.

Un inconvénient de ces solutions de stockage est qu'il peut être difficile de connaître précisément l'état du stock, c'est-à-dire le nombre de bouteilles stockées dans chaque caisse métallique grillagée. En effet, l'état de remplissage des caisses métalliques grillagées peut être différent d'une caisse à l'autre.

Par ailleurs, le type de vin ou le millésime du vin stocké dans les caisses métalliques grillagées peut être différent d'une caisse à l'autre.

Il existe donc un besoin pour une solution de stockage de bouteilles, en particulier de bouteilles de vin, qui permettent une surveillance précise de l'état du stock.

### Résumé de l'invention

L'invention propose un dispositif de stockage pour des récipients tels que des bouteilles ou flacons, comportant une caisse sensiblement parallélépipédique dans laquelle sont agencés plusieurs plaques intercalaires superposées de manière à permettre un empilement de plusieurs couches de récipients en les protégeant les uns des autres contre les chocs, et comportant au moins un plateau de support qui est intercalé entre le fond de la caisse et l'empilement de récipients, le plateau de support comportant au moins une série de capteurs de poids qui sont agencés sous le plateau de support de manière à pouvoir mesurer le poids supporté par ledit plateau de support, chaque série de capteurs de poids étant reliée à un module de communication qui est configuré pour pouvoir transmettre des informations de mesure de poids provenant des capteurs de poids vers une unité électronique centrale de manière à permettre une comptabilisation instantanée des récipients stockés dans le dispositif de stockage.

Selon d'autres caractéristiques de l'invention :
- chaque capteur de poids est monté dans un socle qui comporte une plaquette d'appui inférieure configurée pour reposer sur le fond de la caisse, et une plaquette de fixation supérieure qui est fixée au plateau de support, le capteur de poids étant intercalé selon une direction verticale entre la plaquette d'appui inférieure et la plaquette de fixation supérieure ;
- la plaquette d'appui inférieure est reliée à la plaquette de fixation supérieure par un élément de liaison assurant un degré de mobilité selon la direction verticale entre la plaquette d'appui inférieure et la plaquette de fixation supérieure ;
- le socle comporte une plaquette intercalaire qui est fixée sous la plaquette de fixation supérieure ;
- le dispositif de stockage comporte au moins un accéléromètre configuré pour détecter un mouvement de récipient dans le dispositif de stockage et pour déclencher des mesures de poids par les capteurs de poids ;
- la caisse est équipée d'un module d'alimentation comportant une batterie de stockage d'électricité, ledit module d'alimentation étant configuré pour alimenter les capteurs de poids et le module de communication ;
- la caisse est réalisée par assemblage de grilles métalliques ;
- chaque plaque intercalaire comporte sur chacune de ses faces principales des logements adaptés à la forme des récipients de manière à maintenir les récipients en position dans chaque couche de l'empilement ;
- chaque plaque intercalaire est réalisée d'une seule pièce.

L'invention propose aussi une installation de stockage de récipients comportant au moins deux dispositifs de stockage selon l'une quelconque des caractéristiques précédentes, au moins une unité électronique centrale configurée pour communiquer avec les modules de communication de chaque dispositif de stockage de manière à pouvoir comptabiliser de manière instantanée la quantité de récipients stockés dans chaque dispositif de stockage.

L'invention propose aussi un procédé de surveillance d'un stock de récipients contenus dans au moins un dispositif de stockage selon l'une quelconque des caractéristiques précédentes, le procédé comportant les étapes suivantes :
E1) saisie de données relatives au type de récipient stocké dans le dispositif de stockage, au type de contenu dans chaque récipient, et au type de plaque intercalaire utilisé dans le dispositif de stockage,
E2) obtention de signaux représentatifs de mesures de poids effectuées par les capteur de poids équipant le au moins un plateau de support du dispositif de stockage,
E3) transmission des signaux représentatifs de mesures de poids par le module communication vers une unité électronique centrale,
E4) compilation des mesures de poids par l'unité électronique centrale pour déterminer la masse supportée par le au moins un plateau de support,
E5) comparaison de la masse déterminée à l'étape précédente avec les informations relatives au type de récipient stocké et au type de plaque intercalaire utilisé obtenus à l'étape E1, de manière à déterminer le nombre de récipients stockés dans le dispositif de stockage.

Selon un mode de réalisation avantageux, le procédé comporte l'étape supplémentaire suivante :
E6) détection d'un mouvement sur le plateau de support et déclenchement des étapes E2 et E3 comprenant des mesures de poids lorsque le mouvement détecté est identifié comme étant lié à l'ajout ou au retrait d'au moins un récipient dans le dispositif de stockage.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] est une vue en perspective éclatée qui représente schématiquement un dispositif de stockage selon l'invention ;
[Fig.2] est une vue en coupe axiale selon le plan 2-2 qui représente schématiquement le dispositif de stockage de la figure 1 ;
[Fig.3] est une vue en perspective qui représente un socle équipé d'un capteur de poids apte à équiper le dispositif de stockage de la figure 1 ;
[Fig.4] est une vue éclatée en perspective qui représente le socle de la figure 3 ;
[Fig.5] est un schéma qui illustre une installation de stockage de récipients équipée de dispositifs de stockage selon la figure 1 ;
[Fig.6] est un schéma-bloc qui illustre un procédé de surveillance d'un stock de récipients contenus dans au moins un dispositif de stockage selon la figure 1.

### Description détaillée de l'invention

Dans la description qui va suivre, des éléments identiques, similaires ou analogues seront désignés par les mêmes chiffres de référence.

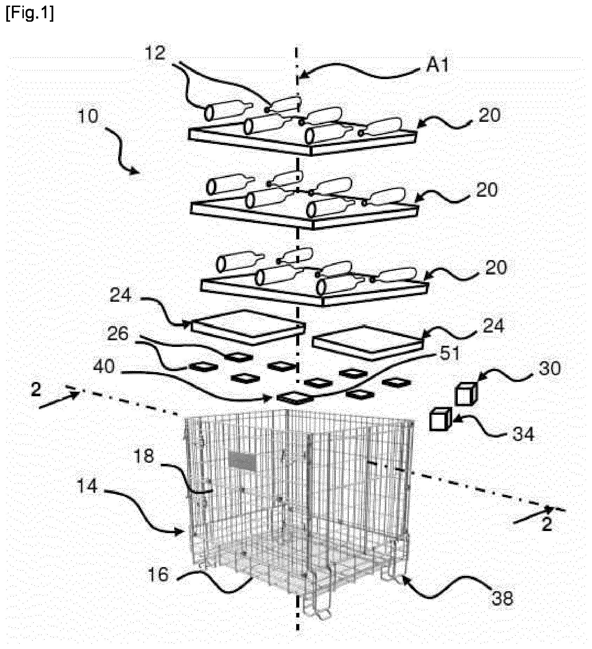

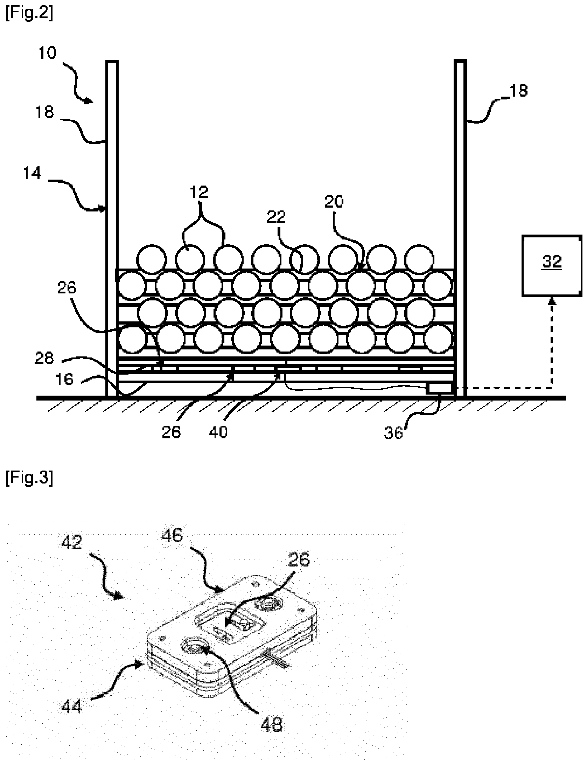

Les figures 1 et 2 représentent schématiquement un dispositif de stockage 10 pour des récipients 12 tels que des bouteilles de vin conforme aux enseignements de l'invention.

Le dispositif de stockage 10 comporte une caisse 14 sensiblement parallélépipédique. Cette caisse 14 est ici constituée par l'assemblage de plusieurs grilles métalliques qui forment le fond 16, et les parois latérales 18.

Les récipients 12 sont ici prévus pour être stockés en position couchée, c'est-à-dire avec leur axe principal parallèle au fond 16 de la caisse 14.

Avantageusement, plusieurs plaques intercalaires 20 sont superposées et intercalées entre les couches de récipients 12 de manière à permettre un empilement de plusieurs couches de récipients 12 selon une direction principale verticale A1. Les plaques intercalaires 20 permettent notamment de protéger les récipients 12 les uns des autres contre les chocs, par exemple lors d'opérations de manutention.

Les plaques intercalaires 20 permettent aussi de conserver les récipients propres, par exemple des bouteilles, ce qui permet un gain de temps lors d'étapes ultérieures d'étiquetage ou de mise en carton.

L'utilisation de ces plaques intercalaires 20 dans la caisse 14, notamment lorsqu'elle est réalisée en parois grillagées, permet d'éviter une déformation des parois latérales 18 et permet d'obtenir une répartition du poids optimale sur le fond 16 de la caisse 14.

Les plaques intercalaires 20 peuvent être du type désigné par « plaque VIPLAC » dans le domaine du stockage de bouteilles.

Dans la suite de la description, on utilisera à titre non limitatif une orientation verticale selon la direction principale A1 d'empilement des couches de récipients 12.

Chaque plaque intercalaire 20 est de préférence réalisée d'une seule pièce, par exemple par injection en matériau plastique ou par thermoformage. Chaque plaque intercalaire 20 comporte, de préférence sur chacune de ses faces principales transversales, des logements 22 adaptés à la forme des récipients 12, de manière à maintenir transversalement les récipients 12 en position dans chaque couche de l'empilement. Les logements 22 forment ici des alvéoles de formes globalement cylindriques adaptées au profil cylindrique des bouteilles de vins.

Chaque plaque intercalaire 20 a ici une forme générale rectangulaire complémentaire des dimensions intérieures de la caisse 14, dans un plan transversal.

Avantageusement, le dispositif de stockage 10 comporte au moins un plateau de support 24 qui est intercalé entre le fond 16 de la caisse 14 et l'empilement de récipients 12.

Selon le mode de réalisation représenté ici, le dispositif de stockage 10 comporte deux plateaux de support 24 qui sont positionnés dans le fond 16 de la caisse 14 et qui couvrent à eux deux la totalité du fond 16 de la caisse 14. Chaque plateau de support 24 a ici une forme globalement rectangulaire.

Selon une variante de réalisation (non représentée), le dispositif de stockage 10 pourrait ne comporter qu'un seul plateau de support 24 ou plus de deux plateaux de support 24, par exemple quatre ou plus.

On note que chaque plateau de support 24 peut être réalisé sous la forme d'une plaque pleine ou sous la forme d'une grille en fil métallique, à la manière de la caisse 14.

Chaque plateau de support 24 comporte au moins une série de capteurs de poids 26, ou jauges de contrainte, qui est agencée sous le plateau de support 24 de manière à pouvoir mesurer le poids supporté par ledit plateau de support 24 lorsqu'il est placé dans le fond de la caisse 14.

Selon l'exemple représenté, chaque plateau de support 24 comporte quatre capteurs de poids 26 qui sont répartis sur la face inférieure 28 du plateau de support 24, par exemple au voisinage des quatre coins.

Chaque série de capteurs de poids 26 est reliée à un module de communication 30 porté par le dispositif de stockage 10. Le module de communication 30 est configuré pour pouvoir transmettre des informations de mesure de poids provenant des capteurs de poids du dispositif de stockage 10 vers une unité électronique centrale 32 de manière à permettre une comptabilisation instantanée des récipients 12 stockés dans le dispositif de stockage 10.

Avantageusement, chaque série de capteurs de poids 26 est reliée à un module d'alimentation 34 porté par le dispositif de stockage 10. Le module d'alimentation 34 comprend par exemple une batterie.

Le module de communication 30 et le module d'alimentation 34 peuvent être agencés dans un même boîtier 36 qui est par exemple fixé sous le fond 16 du dispositif de stockage 10.

Selon un mode de réalisation avantageux, lorsque la caisse 14 comporte des pieds 38 réalisés en fil métallique, le boîtier 36 peut être agencé dans l'un des pieds 38. En effet, chaque pied 38 peut délimiter un espace sensiblement parallélépipédique apte à recevoir un tel boîtier 36, ce qui permet notamment de protéger le boîtier 36, y compris lors d'opérations de manutention, par exemple lorsque le dispositif de stockage 10 est déplacé au moyen d'un outil du type transpalette.

Selon le mode de réalisation représenté ici, une unité électronique intermédiaire 40 est intercalée entre les capteurs de poids 26 et le boîtier 36. L'unité électronique intermédiaire 40 permet par exemple de collecter les mesures de poids effectuées par les capteurs de poids 26 pour les transférer au module de communication 30 et elle permet de distribuer l'alimentation électrique provenant du module d'alimentation 34 à tous les capteurs de pois 26.

L'unité électronique intermédiaire 40 est reliée ici au boîtier 36 par une liaison filaire. L'unité électronique intermédiaire 40 est ici fixée sous les plateaux de support 24.

De préférence, le module de communication 30 est équipé d'une antenne lui permettant de communiquer avec l'unité électronique centrale 32 au moyen d'un protocole de communication sans fil, tel qu'un protocole WiFi.

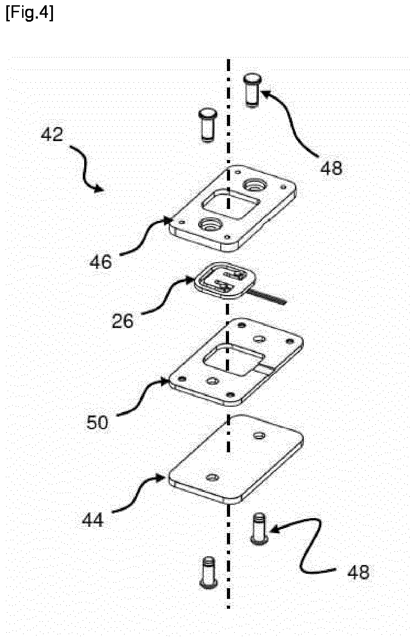

Sur les figures 3 et 4 on a représenté de manière plus détaillée un capteur de poids 26 équipant le dispositif de stockage 10.

Selon le mode de réalisation représenté, chaque capteur de poids 26 est monté dans un socle 42 qui comporte une plaquette d'appui inférieure 44 configurée pour reposer sur le fond 16 de la caisse 14, et une plaquette de fixation supérieure 46 qui est fixée au plateau de support 24.

Le capteur de poids 26 est ici intercalé selon une direction verticale A1 entre la plaquette d'appui inférieure 44 et la plaquette de fixation supérieure 46.

Avantageusement, la plaquette d'appui inférieure 44 est reliée à la plaquette de fixation supérieure 46 par un élément de liaison 48 assurant un degré de mobilité selon la direction verticale A1 entre la plaquette d'appui inférieure 44 et la plaquette de fixation supérieure 46.

Le socle 42 comporte ici une plaquette intercalaire 50 qui est fixée sous la plaquette de fixation supérieure 46, par exemple par vissage, et qui vient pincer une partie du capteur de poids 26 contre la plaquette de fixation supérieure 46.

L'élément de liaison 48 est ici constitué par deux goupilles ou rivets.

Le socle 42 est ici prévu pour être fixé au plateau de support 24 par exemple par soudage ou par une autre solution de fixation adaptée.

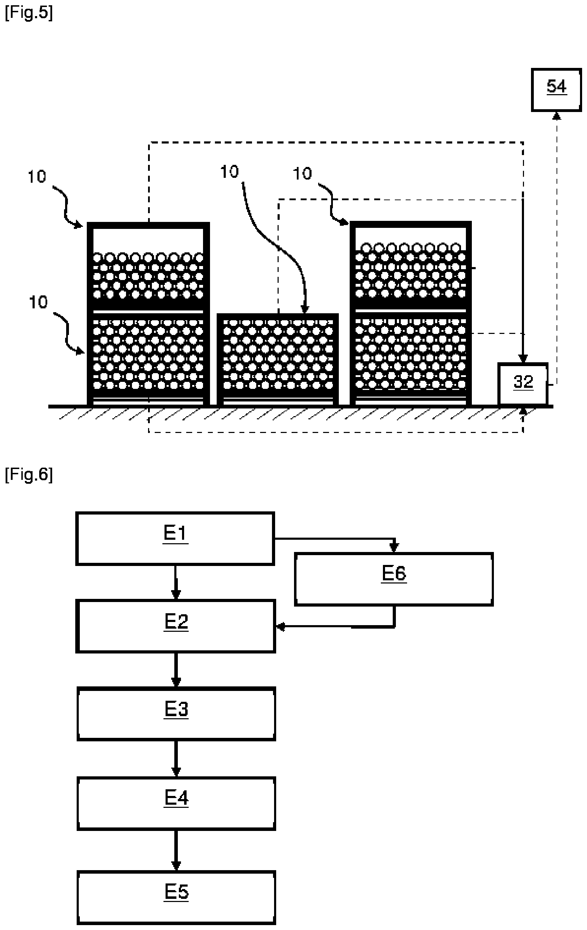

Sur la figure 5 on a représenté un exemple d'installation de stockage de récipients 52 comportant plusieurs dispositifs de stockage 10 selon l'invention.

Les dispositifs de stockage 10 peuvent être en partie gerbés, comme illustré par la figure 5 où deux dispositifs de stockage 10 sont placés sur deux autres dispositifs de stockage 10.

On note que les dispositifs de stockage 10 peuvent avoir des niveaux de remplissage en récipients différents, ce qui rend nécessaire la surveillance de la quantité de récipients contenus dans chaque dispositif de stockage 10.

L'unité électronique centrale 32 est capable de communiquer avec chaque module de communication 30 de chaque dispositif de stockage 10. Cette unité électronique centrale 32 peut donc collecter les données sur l'état du stock de récipient contenu dans chaque dispositif de stockage 10.

Grâce aux mesures effectuées par les capteurs de poids 26, l'unité électronique centrale 32 est capable d'en déduire le nombre de récipients 12 contenus dans chaque caisse 14. En effet, l'unité électronique centrale 32 comporte une mémoire dans laquelle ont été stockées au préalable des informations sur le type de récipient stocké dans chaque dispositif de stockage 10 et leur poids lorsqu'ils sont vides ou lorsqu'ils sont pleins, ainsi que le type de liquide stocké et le poids des plaques intercalaires 20.

Les mesures de poids peuvent être transmises à l'unité électronique centrale 32 à une fréquence prédéterminée, par exemple toutes les 24h ou plusieurs fois par jour. De manière alternative, les mesures de poids peuvent être transmises à l'unité électronique centrale 32 uniquement sur une requête d'un utilisateur qui souhaite connaître l'état du stock de l'installation de stockage de récipients 52 à un instant déterminé.

Avantageusement, les mesures de poids sont transmises en temps réel dès qu'un mouvement entraînant un changement de poids est détecté. Ceci peut être réalisé grâce à un accéléromètre 51 qui est agencé dans le dispositif de stockage 10, par exemple dans l'unité électronique intermédiaire 40.

Grâce à l'accéléromètre 51, il est possible de réveiller le dispositif de stockage 10 lorsqu'il détecte qu'un ou plusieurs récipients 12 sont ajoutés ou retirés. Dans ce cas de figure, l'unité électronique intermédiaire 40 donne l'instruction au module de communication 30 de transmettre de nouvelles mesures de poids qui permettrons à l'unité électronique centrale 32 de déterminer la nouvelle valeur de stock, c'est-à-dire le nombre de récipients 12 contenus dans le dispositif de stockage 10.

L'unité électronique intermédiaire 40 est capable de distinguer si les signaux transmis par l'accéléromètre 51 correspondent à un simple déplacement du dispositif de stockage 10 puisque dans ce cas les capteurs de poids 26 ne détectent pas de changement de poids.

On note que le calcul du stock de récipients est réalisé par incrément ou décrément d'un multiple du poids unitaire de chaque récipient 12, ce qui permet de compenser d'éventuelles dérives des mesures réalisées par les capteurs de poids 26.

On note que chaque dispositif de stockage 10 est identifié individuellement, par exemple par un code de référence, afin de pouvoir stocker des types de récipients différents et/ou des récipients 12 contenant des liquides différents tout en assurant un calcul précis du stock de récipient contenu dans chaque dispositif de stockage 10.

Dans le cas où l'installation de stockage de récipients 52 comporte plusieurs sites distants ne permettant pas à tous les modules de communication 30 de transmettre des données à la même unité électronique centrale 32, une unité distante de supervision 54 peut être prévue. L'installation de stockage de récipients 52 peut alors comporter une unité électronique centrale 52 dans chaque site et chaque unité électronique centrale 52 est capable de communiquer avec l'unité distante de supervision 54 pour lui faire remonter les informations relatives à l'état du stock sur chaque site.

Avantageusement, les unités électroniques intermédiaires 40 ou modules de communication 30 des différents dispositifs de stockage 10 d'un même site peuvent être utilisés comme passerelles pour leur permettre de communiquer entre eux afin d'atteindre l'unité électronique centrale 32 même s'il existe des obstacles à la propagation des ondes de communication utilisées par les modules de communication 30. Les unité électroniques intermédiaires 40 ou les modules de communication 30 peuvent être configurés sous forme de réseau WiFi maillé ou réseau Mesh.

On décrit maintenant un procédé de surveillance du stock de récipients 12 pour l'installation de stockage de récipients 52 décrite précédemment, en considérant notamment la figure 6.

Au cours d'une étape préliminaire E1, pour chaque dispositif de stockage 10, des données relatives au type de récipient stocké et au type de liquide contenu chaque récipient 12 sont saisies et stockées dans une mémoire de l'unité électronique centrale 32. Ceci permet à l'unité électronique centrale 32 de pouvoir calculer l'état du stock de récipients 12 dans chaque dispositif de stockage 10, en fonction du type de récipient et du type de liquide stocké.

Le type de plaque intercalaire 20 et le poids associé de chaque plaque intercalaire peut aussi être saisi dans ladite mémoire pour permettre à l'unité électronique centrale 32 de tenir compte du poids de ces plaques intercalaires 20 pour l'évaluation du nombre de récipients 12 contenus dans chaque dispositif de stockage 10.

Au cours d'une autre étape E2, les capteurs de poids 26 équipant les plateaux de support 24 de chaque dispositif de stockage 10 effectuent des mesures pour fournir des signaux représentatifs du poids mesuré de chaque empilement de récipients 12.

Au cours d'une autre étape E3, les signaux représentatifs des mesures de poids sont transmis par le module communication 30 vers l'unité électronique centrale 32.

Au cours d'une autre étape E4, les mesures de poids provenant des capteurs de poids 26 sont compilées par l'unité électronique centrale 32 pour déterminer la masse de l'empilement supporté par les plateaux de support 24 de chaque dispositif de stockage 10.

Au cours d'une autre étape E5, l'unité électronique centrale 32 compare, pour chaque dispositif de stockage 10, la masse déterminée à l'étape précédente avec les informations relatives au type de récipient stocké, au type de liquide contenu dans les récipients 12 stockés, et au type de plaque intercalaire utilisé, de manière à déterminer le nombre de récipients 12 stockés dans le dispositif de stockage 10 sélectionné.

Avantageusement, au cours d'une autre étape E6, la détection d'un mouvement sur le plateau de support 24 par l'accéléromètre 51 permet de déclencher les étapes E2, E3 de mesures de poids et de transmission des signaux de mesures de poids à l'unité électronique centrale 32. Ces mesures de poids et transmissions de données sont déclenchées si l'unité électronique intermédiaire 40 associée a identifié le signal de mouvement de l'accéléromètre 51 comme correspondant à l'ajout ou au retrait d'un récipient 12.

Dans le cas où un mouvement est détecté sans changement du poids mesuré par les capteurs de poids 26, aucune mesure de poids n'est transmise à l'unité électronique centrale 32 puisque le mouvement correspond probablement à un déplacement du dispositif de stockage 10.

On note que l'étape de détection de mouvement E6 peut être placée juste après l'étape préliminaire de saisie de données E1.

L'unité électronique centrale 32 reproduit ces étapes pour tous les dispositifs de stockage 10 équipant l'installation de stockage de récipients 52.

Le dispositif de stockage 10 selon l'invention présente l'avantage de faciliter la surveillance du stock de récipients sans nécessiter de caisse de type particulier et tout en permettant de conserver la possibilité de gerber les dispositifs de stockage 10.

La solution selon l'invention s'adapte à tout type de récipient et de liquide.

On note que la présence de plaques intercalaires 20 entre les couches d'empilement de récipients 12 permet d'assurer une excellente répartition du poids des récipients sur l'ensemble du ou des plateaux de support 24, ce qui améliore la fiabilité des mesures de poids et la fiabilité de la détermination de l'état du stock de récipients 12.

### LEGENDE

- 10 :: dispositif de stockage
- 12 :: récipient
- 14 :: caisse
- 16 :: fond
- 18 :: paroi latérale
- 20 :: plaque intercalaire
- 22 :: logement
- 24 :: plateau de support
- 26 :: capteur de poids
- 28 :: face inférieure du plateau de support
- 30 :: module de communication
- 32 :: unité électronique centrale
- 34 :: module d'alimentation
- 36 :: boîtier
- 38 :: pied de la caisse
- 40 :: unité électronique intermédiaire
- 42 :: socle
- 44 :: plaquette d'appui inférieure
- 46 :: plaquette de fixation supérieure
- 48 :: élément de liaison
- 50 :: plaquette intercalaire
- 51 :: accéléromètre
- 52 :: installation de stockage de récipients
- 54 :: unité distante de supervision
- A1 :: direction principale verticale

## Revendications

1. Dispositif de stockage (10) pour des récipients (12) tels que des bouteilles ou flacons, comportant une caisse (14) sensiblement parallélépipédique dans laquelle sont agencés plusieurs plaques intercalaires (20) superposées de manière à permettre un empilement de plusieurs couches de récipients (12) en les protégeant les uns des autres contre les chocs, et comportant au moins un plateau de support (24) qui est intercalé entre le fond (16) de la caisse (14) et l'empilement de récipients (12), le plateau de support (24) comportant au moins une série de capteurs de poids (26) qui sont agencés sous le plateau de support (24) de manière à pouvoir mesurer le poids supporté par ledit plateau de support (24), chaque série de capteurs de poids (26) étant reliée à un module de communication (30) qui est configuré pour pouvoir transmettre des informations de mesure de poids provenant des capteurs de poids (26) vers une unité électronique centrale (32) de manière à permettre une comptabilisation instantanée des récipients (12) stockés dans le dispositif de stockage (10).

2. Dispositif de stockage (10) selon la revendication précédente, **caractérisé en ce que** chaque capteur de poids (26) est monté dans un socle (42) qui comporte une plaquette d'appui inférieure (44) configurée pour reposer sur le fond (16) de la caisse (14), et une plaquette de fixation supérieure (46) qui est fixée au plateau de support (24), le capteur de poids (26) étant intercalé selon une direction verticale (A1) entre la plaquette d'appui inférieure (44) et la plaquette de fixation supérieure (46).

3. Dispositif de stockage (10) selon la revendication précédente, **caractérisé en ce que** la plaquette d'appui inférieure (44) est reliée à la plaquette de fixation supérieure (46) par un élément de liaison (48) assurant un degré de mobilité selon la direction verticale (A1) entre la plaquette d'appui inférieure (44) et la plaquette de fixation supérieure (46).

4. Dispositif de stockage selon la revendication précédente, **caractérisé en ce que** le socle (42) comporte une plaquette intercalaire (50) qui est fixée sous la plaquette de fixation supérieure (46).

5. Dispositif de stockage (10) selon l'une quelconque des revendications précédentes, **caractérisé en ce qu'**il comporte au moins un accéléromètre (51) configuré pour détecter un mouvement de récipient (12) dans le dispositif de stockage (10) et pour déclencher des mesures de poids par les capteurs de poids (26).

6. Dispositif de stockage (10) selon l'une quelconque des revendications précédentes, **caractérisé en ce que** la caisse (14) est équipée d'un module d'alimentation (34) comportant une batterie de stockage d'électricité, ledit module d'alimentation (34) étant configuré pour alimenter les capteurs de poids (26) et le module de communication (30).

7. Dispositif de stockage (10) selon l'une quelconque des revendications précédentes, **caractérisé en ce que** la caisse (14) est réalisée par assemblage de grilles métalliques.

8. Dispositif de stockage (10) selon l'une quelconque des revendications précédentes, **caractérisé en ce que** chaque plaque intercalaire (20) comporte sur chacune de ses faces principales des logements (22) adaptés à la forme des récipients (20) de manière à maintenir les récipients (12) en position dans chaque couche de l'empilement.

9. Dispositif de stockage (10) selon la revendication précédente, **caractérisé en ce que** chaque plaque intercalaire (20) est réalisée d'une seule pièce.

10. Installation de stockage de récipients (52) comportant au moins deux dispositifs de stockage (10) selon l'une quelconque des revendications précédentes, au moins une unité électronique centrale (32) configurée pour communiquer avec les modules de communication (30) de chaque dispositif de stockage (10) de manière à pouvoir comptabiliser de manière instantanée la quantité de récipients (12) stockés dans chaque dispositif de stockage (10).

11. Procédé de surveillance d'un stock de récipients (12) contenus dans au moins un dispositif de stockage (10) réalisé selon l'une quelconque des revendications 1 à 9, le procédé comportant les étapes suivantes :
E1) saisie de données relatives au type de récipient stocké dans le dispositif de stockage (10), au type de contenu dans chaque récipient (12), et au type de plaque intercalaire (20) utilisé dans le dispositif de stockage (10),
E2) obtention de signaux représentatifs de mesures de poids effectuées par les capteur de poids (26) équipant le au moins un plateau de support (24) du dispositif de stockage (10), E3) transmission des signaux représentatifs de mesures de poids par le module communication (30) vers une unité électronique centrale (32),
E4) compilation des mesures de poids par l'unité électronique centrale (32) pour déterminer la masse supportée par le au moins un plateau de support (24),
E5) comparaison de la masse déterminée à l'étape précédente avec les informations relatives au type de récipient stocké et au type de plaque intercalaire (20) utilisé obtenus à l'étape E1, de manière à déterminer le nombre de récipients (12) stockés dans le dispositif de stockage (10).

12. Procédé selon la revendication précédente, **caractérisé en ce qu'**il comporte l'étape supplémentaire suivante :
E6) détection d'un mouvement sur le plateau de support (24) et déclenchement des étapes E2 et E3 comprenant des mesures de poids lorsque le mouvement détecté est identifié comme étant lié à l'ajout ou au retrait d'au moins un récipient (12) dans le dispositif de stockage (10).
